(19) **Europäisches Patentamt / European Patent Office / Office européen des brevets**

(11) **EP 2 724 476 B1**

(12) **FASCICULE DE BREVET EUROPEEN**

(45) Date de publication et mention de la délivrance du brevet:
**12.08.2015 Bulletin 2015/33**

(21) Numéro de dépôt: **11787729.0**

(22) Date de dépôt: **20.10.2011**

(51) Int Cl.:
*H04B 7/04* (2006.01)  *H04L 27/26* (2006.01)
*H04L 25/03* (2006.01)  *H04B 7/06* (2006.01)
*H04L 5/00* (2006.01)

(86) Numéro de dépôt international:
**PCT/FR2011/052458**

(87) Numéro de publication internationale:
**WO 2012/052692 (26.04.2012 Gazette 2012/17)**

(54) **PROCEDE ET DISPOSITIF DE COMMUNICATION RADIO POUR ANTENNES D'USAGER MULTIPLES**

FUNKKOMMUNIKATIONSVERFAHREN UND VORRICHTUNG FÜR MEHRBENUTZERANTENNEN

RADIO COMMUNICATION METHOD AND DEVICE FOR MULTIPLE USER ANTENNAS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **22.10.2010 FR 1058688**

(43) Date de publication de la demande:
**30.04.2014 Bulletin 2014/18**

(73) Titulaire: **Orange**
**75015 Paris (FR)**

(72) Inventeurs:
 • **PHAN HUY, Dinh Thuy**
   **F-75004 Paris (FR)**
 • **CRUSSIERE, Matthieu**
   **F-35890 Laille (FR)**
 • **HELARD, Maryline**
   **F-35700 Rennes (FR)**
 • **DUBOIS, Thierry**
   **35700 RENNES (FR)**

(74) Mandataire: **Millet, Sandrine**
   **Orange**
   **FT/OLNC/OLPS/IPL/PAT**
   **38-40, rue du Général Leclerc**
   **92724 Issy-Les-Moulineaux Cedex 9 (FR)**

(56) Documents cités:
   **WO-A1-2007/095102   GB-A- 2 463 508**

 • **HUNG TUAN NGUYEN ED - UMALI E M ET AL: "On the performance of one bit time reversal for multi-user wireless communications", WIRELESS COMMUNICATION SYSTEMS, 2007. ISWCS 2007. 4TH INTERNATIONAL SYMPOSIUM ON, IEEE, PISCATAWAY, NJ, USA, 1 octobre 2007 (2007-10-01), pages 672-676, XP031166854, ISBN: 978-1-4244-0978-5 cité dans la demande**

**Description**

L'invention concerne les systèmes de communication numériques sans fil. Plus précisément, elle concerne une technique d'émission/réception dans le contexte de communications mettant en jeu une pluralité d'antennes d'usager, ces antennes pouvant appartenir à un seul usager ou à plusieurs usagers, chaque usager ayant un nombre d'antennes supérieur ou égal à 1.

De manière générale, la mise en oeuvre de communications de type point-multipoint et multi-antennes pose le problème du partage de l'accès à la ressource spectrale, c'est-à-dire le partage du canal de propagation. Le défi que doit relever une technique d'accès multiple est de permettre la transmission en parallèle de données ou messages différents à destination de récepteurs distincts en partageant une ressource physique commune, et en minimisant les interférences qui en résultent.

Différentes techniques d'accès sont aujourd'hui utilisées dans les systèmes radio. On connaît notamment des techniques exploitant une orthogonalité (temporelle, fréquentielle ou spatiale) afin de réaliser la mise en parallèle de la transmission de l'information : le partage en temps TDMA (initiales des mots anglais « *Time Division Multiple Access* » signifiant « Accès Multiple par Séparation dans le Temps »), le partage en fréquence FDMA (initiales des mots anglais « *Frequency Division Multiple Access* » signifiant « Accès Multiple par Séparation en Fréquence ») tel que l'OFDMA (initiales des mots anglais « *Orthogonal Frequency Division Multiple* Access» signifiant « Accès Multiple par Séparation Orthogonale en Fréquence »), le partage par codes CDMA (initiales des mots anglais « *Code Division Multiple Access* » signifiant « Accès Multiple par Séparation par Codes »), ou le partage en espace SDMA (initiales des mots anglais « *Space Division Multiple Access* » signifiant « Accès Multiple par Séparation dans l'Espace »).

On connaît par exemple, dans le cadre du FDMA, une technique appelée « IR-UWB multibande » (cf. l'article de S. Paquelet et L.-M. Aubert intitulé « An Energy Adaptive Demodulation for High Data Rates with Impulse Radio », Proceedings of IEEE Radio and Wireless Conference, pages 323 à 236, sept. 2004). Il s'agit d'une technique de transmission multibande utilisant une forme d'onde impulsionnelle ; le message à émettre est constitué d'impulsions modulées OOK (initiales des mots anglais « *On-Off Keying* » signifiant « Modulation par Allumage-Extinction »), multiplexées en fréquence sur une pluralité de sous-bandes de fréquences adjacentes et disjointes. Il s'agit donc d'une mise en parallèle sur l'axe fréquentiel de signaux IR-UWB (initiales des mots anglais « *Impulse Radio Ultra-Wide Band* » signifiant « Communications Radio par Impulsions à Bande Ultra-Large »).

Les techniques TDMA, FDMA et CDMA, ou les techniques d'accès multiple « mixtes » (temps-fréquence-code) reposant sur elles, représentent des réponses simples au problème de l'accès multiple, mais atteignent rapidement leurs limites lorsque le nombre d'usagers augmente. Par exemple, dans le cas du FDMA, il n'est possible d'attribuer une sous-bande de fréquences donnée qu'à une seule antenne d'usager, ce qui limite sévèrement l'efficacité spectrale de cette technique.

Le SDMA apporte une réponse à ce problème du nombre d'usagers, mais cette technique présente ses propres inconvénients. En effet, le SDMA utilise des opérations matricielles, généralement complexes, appliquées à la matrice du canal MIMO (initiales des mots anglais « *Multiple-In Multiple-Out* » signifiant « Entrée Multiple Sortie Multiple ») entre un réseau d'antennes en émission et un réseau d'antennes en réception (la matrice du canal MIMO a pour coefficient, à la i-ème ligne et à la j-ème colonne, le gain du canal de propagation entre la j-ème antenne d'émission et la i-ème antenne de réception). De plus, comme il est bien connu de l'homme du métier, le SDMA ne peut apporter de gain de qualité par rapport au CDMA, au FDMA et au TDMA que lorsque le canal de propagation s'y prête, et il peut même présenter, lorsque le canal de propagation ne s'y prête pas, des performances inférieures au CDMA, au FDMA et au TDMA. Deux conditions nécessaires (et non suffisantes) pour que le SDMA apporte un gain de qualité par rapport au CDMA, au FDMA et au TDMA sont, d'une part, que les rapports signal-sur-bruit au niveau des antennes de réception soient élevés, et d'autre part que le rang de la matrice du canal MIMO soit supérieur ou égal au nombre de flux multiplexés ; par conséquent, si le nombre de flux à multiplexer est égal au nombre d'antennes de réception, il faut un nombre d'antennes d'émission supérieur ou égal au nombre d'antennes de réception.

L'application aux communications numériques des techniques dites de « retournement temporel » a permis d'améliorer la gestion de l'accès multiple. On rappelle que le retournement temporel est une technique de focalisation des ondes (à l'origine utilisée dans le domaine des ondes acoustiques) qui repose sur l'invariance par renversement du temps de l'équation d'onde. Ainsi, une onde temporellement inversée se propage comme une onde directe qui remonterait le temps. Lorsqu'une impulsion brève émise par un point d'origine se propage dans un milieu de propagation, et qu'une partie de cette onde reçue par un point destinataire est retournée temporellement avant d'être renvoyée dans le milieu de propagation, l'onde converge vers le point d'origine en y reformant une impulsion brève. Le signal recueilli au point d'origine est quasi-identique dans sa forme au signal d'origine émis par le point d'origine.

La technique du retournement temporel est appliquée aux réseaux de communication radio pour annuler l'effet du canal de propagation sur le signal reçu par une antenne réceptrice notamment en réduisant l'étalement du canal par concentration de l'énergie en un point focal où se trouve cette antenne réceptrice, et pour simplifier le traitement de symboles reçus après la traversée du canal. Pour ce faire, le signal d'antenne émis par une antenne émettrice est pré-égalisé par application de coefficients obtenus à partir du retournement temporel de la réponse impulsionnelle du canal de propagation que ce signal d'antenne doit traverser. La mise en oeuvre du retournement temporel nécessite donc la connaissance du canal de propagation par l'antenne émettrice dans la bande de fréquence dédiée aux signaux issus de cette antenne.

L'application des techniques de retournement temporel à la gestion de l'accès multiple exploite le fait que le canal de propagation entre une antenne émettrice et une antenne réceptrice possède une signature électromagnétique unique, qui peut être utilisée à des fins de séparation de messages adressés à des antennes réceptrices différentes.

Une approche utilisant le retournement temporel a été, ainsi, proposée dans la demande de brevet GB 2463508, dans le cadre d'une transmission par blocs telle que l'OFDMA. Cette demande de brevet divulgue un procédé de communication radio multi-antennes, dans lequel chaque antenne d'usager respective communique avec une station de base sur une sous-bande de fréquences qui lui a été respectivement allouée, au moyen d'un signal filtré par retournement temporel. Cette technique d'accès multiple peut être vue comme un compromis entre un accès par répartition en fréquence et un accès par retournement temporel pur. L'aspect multibande permet de gérer la séparation des signaux que le retournement temporel ne pourrait pas, à lui seul, gérer correctement.

Cette technique réduit la complexité des récepteurs par rapport aux procédés multibande sans filtrage à retournement temporel, tels que le FDMA classique ou la technique « IR-UWB multibande » décrite ci-dessus : en effet, le signal est ici, par principe, pré-égalisé et focalisé temporellement, de sorte qu'à la réception, la démodulation et notamment l'égalisation du canal sont plus simples (vu du récepteur, le canal est quasi-gaussien). Par ailleurs, cette technique réduit la complexité des émetteurs par rapport aux procédés de pré-égalisation connus n'utilisant pas le retournement temporel.

Toutefois, cette technique selon la demande de brevet GB 2463508 présente le même inconvénient que les autres techniques de type FDMA, à savoir une mauvaise efficacité spectrale.

La présente invention concerne donc un procédé de communication radio multi-antennes, dans lequel des sous-bandes de fréquences $B_{s_k}$, où $k=1,\ldots,P$, ont été attribuées respectivement à $P$ antennes d'usager $s_1,\ldots,s_P$ appartenant à un seul usager ou à plusieurs usagers, au sein d'une bande totale de fréquences $B_T$, et dans lequel au moins une de ces antennes d'usager communique avec une station de base sur sa sous-bande de fréquences respective $B_{s_k}$ au moyen d'un signal filtré par retournement temporel. Ledit procédé est remarquable en ce que, pour au moins une paire d'antennes d'usager $s_i$ et $s_j$, où $i,j=1,\ldots,P$ et $i \neq j$, les sous-bandes de fréquences respectives $B_{si}$ et $B_{sj}$ se chevauchent de $\delta B_{s_i,s_j}$, ledit chevauchement $\delta B_{s_i,s_j}$, étant une fonction prédéterminée de la corrélation entre les canaux de propagation respectifs de ces deux antennes d'usager avec ladite station de base.

On notera que, dans le cadre de la présente invention, on désigne par « station de base » tout point d'émission et/ou réception central communiquant avec une pluralité d'antennes, dites « antennes d'usager ».

On organise ainsi une répartition des signaux sur la bande totale du système, en autorisant des réutilisations, totales ou partielles, de sous-bandes, en fonction de la corrélation entre les canaux affectés respectivement à chaque antenne d'usager. Ainsi, contrairement aux approches FDMA, qui évitent tout chevauchement entre les diverses sous-bandes, les signaux ne sont ici pas nécessairement séparés en fréquence, mais peuvent être répartis avec une certaine proportion de recouvrement spectral. Plus précisément, deux antennes d'usager dont les canaux sont fortement intercorrélés exploiteront préférablement des sous-bandes disjointes, alors que deux antennes d'usager dont les canaux sont suffisamment décorrélés pourront exploiter la même sous-bande. De façon intermédiaire, des recouvrements partiels peuvent être prévus en fonction des niveaux d'interférence résiduelle, comme expliqué en détail ci-dessous. Le retournement temporel permet en effet avantageusement de séparer les signaux émis dans la même bande ou se recouvrant partiellement en fréquence.

Grâce à ces dispositions, on améliore avantageusement l'efficacité spectrale. En outre, la présente invention a l'avantage d'apporter un gain de qualité -- ou du moins d'éviter toute perte de qualité, par rapport au CDMA, au FDMA ou au TDMA, quel que soit le canal de propagation, c'est-à-dire même quand les rapports signal-sur-bruit ne sont pas très élevés, et même quand le rang de la matrice du canal MIMO a un rang inférieur à 2 : en effet, selon l'invention, on contrôle le chevauchement partiel des bandes de fréquences en fonction de la corrélation entre les canaux de propagation. Par ailleurs, la contrainte de l'approche SDMA selon laquelle le nombre d'antennes d'émission doit être d'autant plus important que le nombre d'antennes de réception est lui-même important est avantageusement supprimée.

On notera également que l'invention ne requiert aucune orthogonalité.

Selon des caractéristiques particulières, ladite corrélation entre les canaux de propagation de deux antennes d'usager $s_i$ et $s_j$ est évaluée à partir des fonctions d'autocorrélation et d'intercorrélation entre les réponses impulsionnelles $h_i(t)$ et $h_j(t)$ de ces deux canaux.

Grâce à ces dispositions, on peut commodément, comme décrit en détail ci-dessous, construire une métrique pour évaluer l'effet du canal d'une antenne d'usager sur le canal d'une autre antenne d'usager, et par suite, la corrélation entre ces deux canaux.

Selon d'autres caractéristiques particulières, pour inclure une antenne d'usager supplémentaire, ledit procédé comprend les étapes suivantes :

- calcul, pour chaque paire d'antennes d'usager $s_i$ et $s_j$, où $i,j$=1,..., $P$ et $i \neq j$, d'un chevauchement cible $\delta B_{s_i,s_j}$ ;

- redistribution de $P$ sous-bandes de fréquences aux $P$ antennes d'usager, à présent référencées $\omega_1,...,\omega_P$, de telle sorte que les sous-bandes de chaque paire de sous-bandes successives $B_{\omega_l}$ et $B_{\omega_{l+1}}$ se chevauchent de $\delta B_{s_i,s_j}$, où l'antenne $\omega_l$ était précédemment référencée $s_i$ et l'antenne $\omega_{l+1}$ était précédemment référencée $s_j$ ;

- attribution à ladite nouvelle antenne d'usager, référencée $\omega_{P+1}$, dans la bande $B_T$, d'une sous-bande de fréquences $B_{\omega_{P+1}}$ de largeur égale à une partie au moins de la somme des chevauchements $\delta B_{s_i,s_j}$ ; et

- signalisation à chacune des ($P$ + 1) antennes d'usager de la nouvelle sous-bande de fréquences $B_{\omega_k}$, où $k$=1,..., $P$ + 1, qui lui est respectivement attribuée.

Grâce à ces dispositions, contrairement à l'approche SDMA classique, l'optimisation de l'utilisation de la ressource spectrale ne requiert pas d'opérations matricielles complexes.

Corrélativement, l'invention concerne un dispositif de communication radio multi-antennes possédant des moyens pour communiquer avec $P$ antennes d'usager $s_1,...,s_P$ appartenant à un seul usager ou à plusieurs usagers à qui des sous-bandes de fréquences $B_{s_k}$, où $k$=1,..., $P$, ont été attribuées respectivement au sein d'une bande totale de fréquences $B_T$, et possédant des moyens pour communiquer avec au moins une de ces antennes d'usager sur sa sous-bande de fréquences respective $B_{s_k}$ au moyen d'un signal filtré par retournement temporel. Ledit dispositif est remarquable en ce qu'il possède des moyens pour attribuer à au moins une paire d'antennes d'usager $s_i$ et $s_j$, où $i,j$=1,..., $P$ et $i \neq j$, des sous-bandes de fréquences respectives $B_{s_i}$ et $B_{s_j}$ se chevauchant de $\delta B_{s_i,s_j}$, ledit chevauchement $\delta B_{s_i,s_j}$ étant une fonction prédéterminée de la corrélation entre les canaux de propagation respectifs de ces deux antennes d'usager avec ledit dispositif.

Selon des caractéristiques particulières, ledit dispositif possède des moyens pour évaluer ladite corrélation entre les canaux de propagation de deux antennes d'usager $s_i$ et $s_j$ à partir des fonctions d'autocorrélation et d'intercorrélation entre les réponses impulsionnelles $h_i(t)$ et $h_j(t)$ de ces deux canaux.

Les avantages offerts par ces dispositifs sont essentiellement les mêmes que ceux offerts par les procédés corrélatifs succinctement exposés ci-dessus.

L'invention vise également une station de base comprenant l'un quelconque des dispositifs succinctement décrits ci-dessus.

On notera qu'il est possible de réaliser les dispositifs succinctement décrits ci-dessus dans le contexte d'instructions logicielles et/ou dans le contexte de circuits électroniques.

L'invention vise également un programme d'ordinateur téléchargeable depuis un réseau de communication et/ou stocké sur un support lisible par ordinateur et/ou exécutable par un microprocesseur. Ce programme d'ordinateur est remarquable en ce qu'il comprend des instructions pour l'exécution des étapes de l'un quelconque des procédés de communication radio multi-antennes succinctement exposés ci-dessus, lorsqu'il est exécuté sur un ordinateur.

Les avantages offerts par ce programme d'ordinateur sont essentiellement les mêmes que ceux offerts par lesdits procédés.

D'autres aspects et avantages de l'invention apparaîtront à la lecture de la description détaillée ci-dessous de modes de réalisation particuliers, donnés à titre d'exemples non limitatifs. La description se réfère aux dessins qui l'accompagnent, dans lesquels :

- la figure 1 représente schématiquement la structure d'un signal d'émission à destination d'une pluralité d'antennes de réception, selon un mode de réalisation de l'invention,
- la figure 2 est un exemple d'allure du spectre associé au signal illustré sur la figure 1, et
- la figure 3 illustre une procédure de redistribution de sous-bandes de fréquences, selon un mode de réalisation de l'invention.

L'invention se place dans le cadre de communications entre une station de base et une pluralité d'antennes d'usager, au moyen d'un signal combinant une transmission multibande avec un filtrage à retournement temporel.

Cette approche ne doit donc pas être confondue avec une approche *monobande* utilisant un filtrage à retournement temporel, telle que celle qui a été appliquée aux communications à bande ultra-large (« *Ultra-Wide Band* », ou UWB, en anglais) dans le cadre du SDMA (cf. l'article de H.T. Nguyen intitulé « On the performance of one bit time reversal for multi-user wire/ess communications », IEEE ISWCS, pages 672 à 676, Trondheim, Norvège 2007) : en effet, dans cette technique, dite du « SDMA UWB », chaque signal émis occupe entièrement la bande exploitée par le système (plus précisément, chaque signal émis présente une forme d'onde de type impulsionnel occupant une bande de fréquences de plusieurs centaines de MHz). Cette technique SDMA UWB présente l'avantage d'être plus simple à mettre en oeuvre que les techniques SDMA classiques en ce qui concerne les opérations matricielles. Toutefois, elle présente le même inconvénient que les autres techniques SDMA : elle n'apporte un gain de qualité par rapport au CDMA, au FDMA ou au TDMA que lorsque le canal de propagation s'y prête, et elle peut même provoquer une perte de qualité lorsque le canal de propagation ne s'y prête pas ; comme mentionné ci-dessus, la présente invention a l'avantage d'apporter un gain de qualité -- ou du moins d'éviter toute perte de qualité, par rapport au CDMA, au FDMA ou au TDMA, quel que soit le canal de propagation. De plus, la présente invention réduit la complexité des récepteurs par rapport au SDMA UWB, et ce, même dans le cas où l'on n'a qu'un seul usager : cela résulte de l'étroitesse relative (de préférence) de la bande dans laquelle le signal reçu est échantillonné par comparaison avec la bande totale d'émission $B_T$ qui doit être (de préférence) large pour permettre une bonne focalisation (la focalisation temporelle est d'autant plus efficace que la bande $B_T$ utilisée pour effectuer le retournement temporel est large).

Considérons à présent, à titre d'exemple de réalisation, un système de communication mettant en jeu une station de base E équipée d'une antenne de transmission et des points de réception $R_k$ (terminaux d'usager) équipés chacun d'une antenne de réception, où $k=1,...,K$, distribués dans l'environnement spatial du point d'émission. Pour simplifier les notations, nous appelerons « antenne $k$ » l'antenne du point de réception $R_k$. La station de base sélectionne des usagers, et alloue à chacun une sous-bande de la bande totale de fréquences $B_T$ du système.

Les différentes réponses impulsionnelles des canaux reliant l'antenne du point E et chacune des antennes $k$ sont supposées connues de la station de base, suite à une phase classique d'apprentissage de canal.

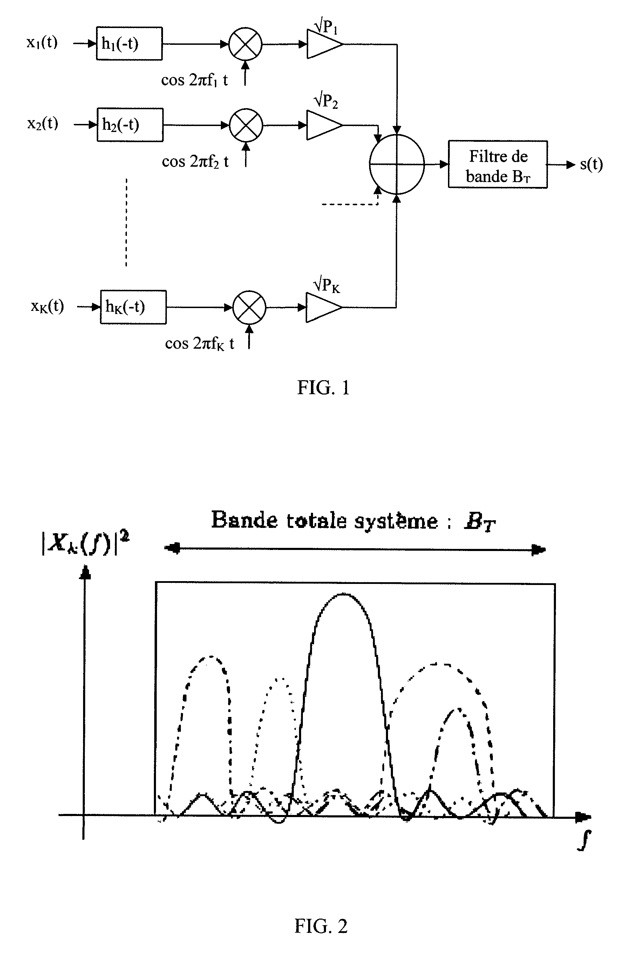

Fort de cette connaissance, l'émetteur forme, comme illustré schématiquement sur la **figure 1**, un signal d'émission composé des différents messages, dans lequel $x_k(t)$ est le message à destination de l'antenne $k$, $h_k(t)$ est la réponse impulsionnelle du canal entre la station de base et l'antenne $k$, et $f_k$ est la fréquence porteuse utilisée pour transmettre le message $x_k(t)$ vers le récepteur $k$. Le signal émis est donc de la forme :

$$s(t) = \sum_{k=1}^{K} \sqrt{P_k} \left( x_k(t) \otimes h_k(-t) \right) \cdot \cos(2\pi f_k t) \;,$$

où $P_k$ est la puissance utilisée pour transmettre vers l'antenne $k$, et le symbole «$\otimes$» désigne le produit de convolution. La notation $h_k(-t)$ (par opposition à $h_k(t)$) désigne l'application d'un filtre à retournement temporel, tel que décrit par exemple dans l'article de H.T. Nguyen cité ci-dessus ; ce filtre à retournement temporel est appliqué sur une bande plus large que celle de chaque message individuel. Enfin, le signal est filtré passe-bande sur la bande totale du système $B_T$, cette bande étant de préférence largement supérieure à la bande minimale nécessaire à la transmission de chaque message $x_k(t)$.

Un exemple d'allure du spectre du signal résultant est présenté sur la **figure 2** dans le cas de signaux $x_k(t)$, dont les durées de symbole $T_s$ sont éventuellement différentes entre elles mais toujours telles que $1/T_s < B_T$. Sur cette figure, la notation $X_k(f)$ représente la transformée de Fourier de $x_k(t)$.

Au point de réception $R_k$, le récepteur n°$k$ filtre le signal qui lui est destiné autour d'une sous-bande qui lui est associée. La réduction des interférences résiduelles issues d'autres signaux ou bribes de signaux présents dans la même bande est gérée par la focalisation spatiale résultant du retournement temporel.

La généralisation à un système comprenant une station de base équipée de plusieurs antennes d'émission et/ou des usagers équipés d'une ou plusieurs antenne(s) de réception, peut être facilement réalisée par l'Homme du Métier.

On va décrire à présent les étapes d'un mode de réalisation du procédé de distribution de sous-bandes de fréquences selon l'invention.

Étape 0 : allocation de ressources initiale

On suppose que la station de base a alloué des sous-bandes (disjointes ou non) à des antennes du système, et que ces sous-bandes couvrent ensemble la totalité de la bande $B_T$ disponible. Soit $P$ le nombre d'antennes sélectionnées, et $S = \{s_1...s_P\}$ l'ensemble de ces antennes.

On suppose que la station de base connaît le canal de propagation MIMO. On suppose que, connaissant le canal MIMO, la station de base est capable de prédire le débit atteignable par chaque antenne en réception si le retournement temporel était appliqué pour focaliser un flux de données vers l'antenne considérée. On suppose qu'elle peut faire cette prédiction en fonction de la bande de fréquence, de la puissance, de la modulation et du codage qui seraient alloués à l'antenne considérée.

On suppose, de plus, que la station de base connaît le débit cible de chaque antenne $s_k$, et qu'elle est capable de déterminer en conséquence, au moyen d'algorithmes de contrôle de puissance et d'adaptation de lien et d'ordonnancement connus (par exemple l'ordonnancement dit « proportionnellement équitable », ou « *proportional fair scheduling* » en anglais), la puissance, dont la densité spectrale sera notée $p_k$, et la bande de fréquences, notée $B_{s_k}$, requises pour atteindre ce débit cible, sous hypothèse de retournement temporel.

On suppose qu'après cette étape initiale, les deux conditions suivantes sont réunies :

- certaines antennes d'usager n'ont pas encore été sélectionnées (autrement dit, on veut passer de $K = P$ à $K = P + 1$) ; et
- la puissance de transmission maximum de la station de base n'est pas encore atteinte.

On va chercher à présent à libérer une bande de fréquences pour une antenne supplémentaire, de manière à augmenter le débit total du système, mais sans toutefois dégrader le débit des antennes déjà sélectionnées. Dans ce but, on va introduire un chevauchement entre les bandes déjà allouées de manière à réduire l'occupation de la bande de fréquences du système. Ce chevauchement est calculé de manière à ce que les interférences entre antennes déjà sélectionnés restent suffisamment faibles pour préserver le débit de ces antennes.

Étape 1 : Estimation de canal, et retournement temporel

Dans le présent mode de réalisation, le calcul de la répartition des antennes sur la bande totale du système utilise les fonctions d'autocorrélation et d'intercorrélation entre les réponses impulsionnelles $h_k(t)$ des différents canaux. Plus précisément, on peut commodément évaluer l'effet du canal de l'antenne $s_j$ sur le canal de l'antenne $s_i$ au moyen de la métrique suivante :

$$\Gamma_{ij} = \frac{\sum_{n=1}^{N} \left| h_i(nT_e) \right|^2}{\sum_{n=1}^{N} h_i(nT_e) h_j(nT_e)} \ ,$$

où $i$ et $j$ désignent les indices de deux antennes, $T_e$ est la période d'échantillonnage (égale à $1/B_T$), et $n$ est l'indice de l'échantillon parmi les $N$ échantillons successifs requis pour décrire la réponse impulsionnelle $h_k(t)$ du canal n° $k$. Plus les canaux $i$ et $j$ possèdent des réponses impulsionnelles décorrélées, et plus cette métrique est forte. Ainsi, une mise en oeuvre simple de la répartition en fréquences consiste à appliquer un chevauchement entre les sous-bandes de fréquences des antennes $s_i$ et $s_j$ qui est fonction des valeurs de la métrique associées à la corrélation du canal de l'antenne $s_j$ avec le canal de l'antenne $s_i$, et la corrélation du canal de l'antenne $s_i$ avec le canal de l'antenne $s_j$.
On définit les quantités suivantes :

$$\gamma_i(t) = h_i(-t) \otimes h_i(t) \ ,$$

$$\gamma_{ij}(t) = h_j(-t) \otimes h_i(t) \ ,$$

$$\Gamma_{s_i} = E[\left| \gamma_i(t) \right|^2] \ ,$$

et

$$\Gamma_{s_i s_j} = E[\left| \gamma_{ij}(t) \right|^2] \ ,$$

où la notation « $E$[...] » désigne la moyenne temporelle (moyenne sur la durée de la réponse impulsionnelle du canal). Ainsi : $\Gamma_{ij} = \Gamma_{s_i}/\Gamma_{s_i s_j}$.
Les quantités $\Gamma_{si}$ et $F_{s_i s_j}$ sont estimées par la station de base lors d'une phase d'apprentissage. Par exemple, $h_i(t)$ et $h_j(t)$ sont estimés à partir de signaux pilotes envoyés par les antennes $i$ et $j$ et reçus par la station de base, puis les $\Gamma_{s_i}$ et $\Gamma_{s_i s_j}$ sont calculés à partir de $h_i(t)$ et $h_j(t)$.

Étape 2 : Calcul des chevauchements

Cette étape 2 est mise en oeuvre à chaque fois que de besoin lors de la mise en oeuvre de l'étape 3 décrite ci-dessous.

On définit un chevauchement maximum tolérable par l'antenne $s_i$ avec l'antenne $s_j$ de la façon suivante :

- $\delta B_{s_j \to s_i} = \alpha_{ij}$ si $\alpha_{ij} > \delta B_{\min}$, et
- $\delta B_{s_j \to s_i'} = 0$ si $\alpha_{ij} \leq \delta B_{\min}$,

où $\delta B_{\min}$ est un chevauchement minimum (dû à la granularité en fréquence de l'allocation de ressource), et $\alpha_{ij}$ est une quantité, qui sera appelée « facteur d'interférence », dont le calcul est explicité ci-dessous.

On définit finalement le chevauchement entre les canaux des antennes $s_i$ et $s_j$ comme suit :

$$\delta B_{s_i, s_j} = \min\left(\delta B_{s_j \to s_i}, \delta B_{s_i \to s_j}\right).$$

En effet, ce chevauchement est tolérable à la fois par $s_i$ et par $s_j$.

On va expliquer à présent comment calculer le facteur d'interférence $\alpha_{ij}$, selon plusieurs variantes.

*Variante 1*

On définit un coefficient de proportionnalité $\theta$ prédéterminé pour limiter les interférences entre deux antennes. Le facteur d'interférence $\alpha_{ij}$ associé aux antennes $i$ et $j$ est calculé de la manière suivante :

$$\alpha_{ij} = B_{s_i} \frac{\Gamma_{s_i}}{\Gamma_{s_i s_j}} \theta .$$

Dans cette variante 1, la nouvelle densité spectrale de puissance qui sera attribuée respectivement à chaque antenne lors de l'étape 3 ci-dessous sera préférablement égale à la précédente.

*Variante 2*

On définit un seuil minimum $nir_{\min}$ de rapport bruit sur interférence toléré pour que l'introduction des chevauchements ne dégrade pas le débit de l'antenne $s_i$. On peut prendre par exemple : $nir_{\min} = 100$.

Le facteur d'interférence $\alpha_{ij}$ associé est calculé de la manière suivante :

$$\alpha_{ij} = B_{s_i} \frac{N_0}{\rho_{s_j} \Gamma_{s_i s_j} nir_{\min}} .$$

Dans cette variante 2, la nouvelle densité spectrale de puissance qui sera attribuée respectivement à chaque antenne lors de l'étape 3 ci-dessous sera préférablement égale à la précédente.

*Variante 3*

Cette variante, ainsi que les variantes 4 et 5 ci-dessous, se réfèrent au rapport signal sur bruit et interférence (« *Signal over Interference and Noise Ratio* », ou SINR en anglais) produit par l'antenne $s_j$ sur l'antenne $s_i$ lorsque les bandes $B_{s_i}$ et $B_{s_j}$ se chevauchent de $\delta B$, et qui sera noté $\sin r_{s_j \to s_i}(\delta B)$. Compte tenu du fait que les signaux des antennes $s_j$ et $s_i$ sont transmis en retournement temporel, ce SINR a pour expression :

$$\sin r_{s_j \to s_i}(\delta B) = \frac{\rho_{s_i} \Gamma_{s_i}}{N_0 + \rho_{s_j} \Gamma_{s_i s_j} \frac{\delta B}{B_{s_i}}} ,$$

où $N_0$ désigne la densité spectrale du bruit.

Dans cette variante 3, le facteur d'interférence $\alpha_{ij}$ est calculé en fonction d'un ratio prédéterminé $X$ faible des débits des antennes. Plus précisément, $\alpha_{ij}$ est défini comme étant la valeur maximum de $\delta B$ qui vérifie l'inégalité suivante :

$$1 - \frac{B_{s_i} \log\left(1 + \dfrac{\rho_{s_i}\Gamma_{s_i}}{N_0 + \rho_{s_j}\Gamma_{s_i s_j}\dfrac{\delta B}{B_{s_i}}}\right)}{B_{s_i} \log\left(1 + \dfrac{\rho_{s_i}\Gamma_{s_i}}{N_0}\right)} < X \ .$$

Donc $\alpha_{ij}$ vaut :

$$\alpha_{ij} = B_{s_i} \frac{\dfrac{\rho_{s_i}\Gamma_{s_i}}{\left(1 + \dfrac{\rho_{s_i}\Gamma_{s_i}}{N_0}\right)^{1-X} - 1} - N_0}{\rho_{s_j}\Gamma_{s_i s_j}} \ .$$

Dans cette variante 3, la nouvelle densité spectrale de puissance qui sera attribuée respectivement à chaque antenne lors de l'étape 3 ci-dessous sera préférablement égale à la précédente.

*Variante 4*

Le facteur d'interférence $\alpha_{ij}$ est calculé de manière à limiter la dégradation des SINR des antennes déjà sélectionnés à un ratio prédéterminé $X$ de leur SINR initial.
La station de base calcule $\alpha_{ij}$ comme étant la valeur maximum de $\delta B$ qui vérifie l'inégalité suivante :

$$1 - \frac{\dfrac{\rho_{s_i}\Gamma_{s_i}}{N_0 + \rho_{s_j}\Gamma_{s_i s_j}\dfrac{\delta B}{B_{s_i}}}}{\dfrac{\rho_{s_i}\Gamma_{s_i}}{N_0}} < X \ .$$

Donc $\alpha_{ij}$ vaut :

$$\alpha_{ij} = B_{s_i} \frac{N_0}{\rho_{s_j}\Gamma_{s_i s_j}} \frac{X}{1-X} \ .$$

Dans cette variante 4, la nouvelle densité spectrale de puissance qui sera attribuée respectivement à chaque antenne lors de l'étape 3 ci-dessous sera préférablement égale à la précédente.

*Variante 5*

Lorsque le bruit est négligeable devant l'interférence, le SINR s'écrit :

$$\sin r_{s_j \to s_i}(\delta B) = \frac{\rho_{s_i}\Gamma_{s_i}}{N_0 + \rho_{s_j}\Gamma_{s_i s_j}\dfrac{\delta B}{B_{s_i}}} \approx \frac{\rho_{s_i}\Gamma_{s_i}}{\rho_{s_j}\Gamma_{s_i s_j}\dfrac{\delta B}{B_{s_i}}} \ .$$

Le facteur d'interférence $\alpha_{ij}$ est calculé de manière à contraindre le rapport signal sur interférence des antennes $s_i$ déjà sélectionnés à excéder un seuil prédéterminé $y_{s_i}$.

La station de base calcule $\alpha_{ij}$ comme étant la valeur maximum de $\delta B$ qui vérifie l'inégalité suivante :

$$\frac{\rho_{s_i}\Gamma_{s_i}}{\rho_{s_j}\Gamma_{s_i s_j}\dfrac{\delta B}{B_{s_i}}} > y_{s_i} \ .$$

Donc $\alpha_{ij}$ vaut :

$$\alpha_{ij} = B_{s_i}\frac{\rho_{s_i}}{\rho_{s_j}}\frac{\Gamma_{s_i}}{\Gamma_{s_i s_j}}\frac{1}{y_{s_i}} \ .$$

Afin de garantir, dans la mise en oeuvre de cette variante 5, que le bruit est effectivement négligeable, la nouvelle densité spectrale de puissance qui sera attribuée respectivement à chaque antenne lors de l'étape 3 ci-dessous sera préférablement augmentée par rapport à la précédente (par exemple, en multipliant l'ancienne densité spectrale de puissance par un facteur constant prédéterminé strictement supérieur à 1).

D'autres variantes pour le calcul du facteur d'interférence $\alpha_{ij}$ sont naturellement possibles.

<u>Étape 3 : Redistribution de sous-bandes et de puissances</u>

Lors de cette étape 3, on construit une séquence ordonnée $\Omega$ avec les éléments de $S$, c'est-à-dire un classement des antennes en fréquence: pour $v = 1,.., P$, on attribue à l'antenne $\omega_v$ une bande de fréquence $B_{\omega_v}$ située entre $f_{v,min}$ et $f_{v,max}$.

Ce reclassement est agencé de telle sorte que les sous-bandes de chaque paire de sous-bandes successives $B_{\omega l}$ et $B_{\omega l+1}$ se chevauchent de $\delta B_{s_i s_j}$, où l'antenne $\omega_l$ était précédemment référencée $s_i$ et l'antenne $\omega_{l+1}$ était précédemment référencée $s_j$.

En particulier, lorsque les chevauchements sont calculés comme décrit dans l'étape 2 ci-dessus, on augmente de manière contrôlée l'interférence entre flux en fonction des canaux de propagation. On améliore ainsi le débit total du système, tout en conservant (ou en dégradant de manière contrôlée) les débits des antennes déjà sélectionnées.

Par ailleurs, on réattribue à chaque antenne une densité spectrale de puissance $\phi_v$, la liste de ces densités spectrales formant un ensemble noté $\Phi$.

On notera qu'avant de passer à l'étape 4, il est possible de réitérer les étapes 0, 1, 2, et 3 ci-dessus, en prenant comme allocation de départ dans la nouvelle étape 0, l'allocation calculée à l'itération précédente dans l'étape 3. Ce processus itératif doit s'arrêter lorsque le résultat de l'étape 2 ne libère pas de la bande ou que le nombre maximum d'antennes concerné a été atteint. On notera que l'amélioration apportée par ces réitérations est particulièrement sensible lorsque les sous-bandes de fréquences allouées à l'étape 0 initiale (i. e. avant réitération) ne se chevauchent pas.

Un algorithme pour réaliser cette redistribution de sous-bandes et de puissances est présenté, à titre d'exemple, en Annexe 1, dans le cadre des variantes dans lesquelles la densité spectrale de puissance attribuée à chaque antenne reste inchangée.

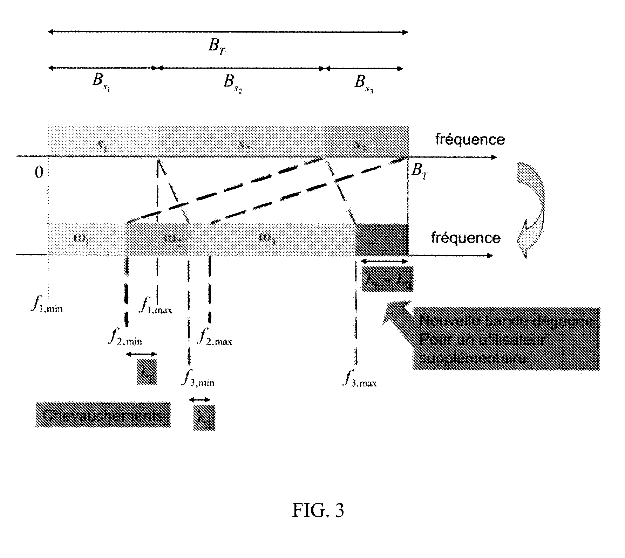

Un exemple de mise en oeuvre de cette étape 3 est illustré sur la **figure 3**. On suppose ici qu'au départ, trois antennes ($P=3$) se partagent la bande $B_T$ selon des sous-bandes respectives $B_{S1}$, $B_{S2}$ et $B_{S3}$. Suite à l'étape 4 :

- l'antenne précédemment référencée $s_1$ est à présent référencée $\omega_1$, et se voit attribuer une sous-bande $B_{\omega 1}$ comprise entre $f_{1,min}$ et $f_{1,max}$ ;
- l'antenne précédemment référencée $s_2$ est à présent référencée $\omega_3$, et se voit attribuer une sous-bande $B_{\omega 3}$ comprise entre $f_{3,min}$ et $f_{3,max}$ ; et
- l'antenne précédemment référencée $s_3$ est à présent référencée $\omega_2$, et se voit attribuer une sous-bande $B_{\omega 2}$ comprise

entre $f_{2,min}$ et $f_{2,max}$.

Soit $\lambda$ la liste des chevauchements associés aux interfaces de la séquence $\Omega$. Les multiples chevauchements permettent de dégager une sous-bande supplémentaire de taille $B_{\omega_{P+1}} = \sum_{\nu=1}^{P} \lambda_\nu$ . Cette bande pourra être avantageusement attribuée à une antenne qui n'appartenait pas à la liste $S$ ou à la liste $\Omega$ et qui, du fait que la bande $B_T$ était entièrement occupée, n'avait pas pu précédemment communiquer avec la station de base comme souhaité. En variante, on peut répartir cette sous-bande supplémentaire sur une pluralité d'antennes supplémentaires, puis, optionnellement, réitérer la procédure de distribution de sous-bandes selon l'invention afin de maximiser l'efficacité spectrale.

Par exemple, sur la figure 3, le fait que $f_{2,min} < f_{1,max}$ correspond à un recouvrement $\lambda_1$, et le fait que $f_{3,min} < f_{2,max}$ correspond à un recouvrement $\lambda_2$. On a ainsi fait place, entre $f_{3,max}$ et $B_T$, à une nouvelle sous-bande $B_{\omega_4}$ de largeur $(\lambda_1 + \lambda_2)$, qui pourra être attribuée à une quatrième antenne.

Étape 4 : Signalisation

La station de base signale à chaque dispositif d'antenne la sous-bande de fréquences qui lui est respectivement attribuée. Cette signalisation peut comporter des informations sur les chevauchements (présence ou absence, position en fréquence).

On notera que la présente invention est applicable aussi bien aux transmissions descendantes (« *downlink* » en anglais) qu'aux transmissions montantes (« *uplink* » en anglais).

Dans le cas des transmissions descendantes, la station de base transmet également toutes les informations nécessaires aux récepteurs pour qu'ils puissent démoduler le signal de données, tel que décrit ci-dessus, qui leur est ensuite envoyé par la station de base. Les informations sur les chevauchements peuvent être particulièrement utiles à cet égard.

Dans le cas des transmissions montantes, on considère une station de base équipée d'au moins $P$ antennes de réception pour $P$ usagers équipés d'une antenne d'émission. La station de base associe une antenne de réception respective à chaque usager. Puis la station de base met en oeuvre l'algorithme décrit ci-dessus. Enfin, elle transmet à chaque dispositif d'antenne d'émission des informations comprenant notamment la sous-bande de fréquences et la puissance qui lui sont respectivement attribuées. Les antennes d'émission peuvent alors transmettre des données vers la station de base conformément à ces informations.

On notera pour terminer que la mise en oeuvre de l'invention au sein des noeuds d'un réseau de communication radio (notamment, les stations de base) peut être réalisée au moyen de composants logiciels et/ou matériels.

Les composants logiciels pourront être intégrés à un programme d'ordinateur classique de gestion de noeud de réseau. C'est pourquoi, comme indiqué ci-dessus, la présente invention concerne également un système informatique. Ce système informatique comporte de manière classique une unité centrale de traitement commandant par des signaux une mémoire, ainsi qu'une unité d'entrée et une unité de sortie. De plus, ce système informatique peut être utilisé pour exécuter un programme d'ordinateur comportant des instructions pour la mise en oeuvre du procédé de communication radio multi-antennes selon l'invention.

En effet, l'invention vise aussi un programme d'ordinateur téléchargeable depuis un réseau de communication comprenant des instructions pour l'exécution des étapes d'un procédé de communication radio multi-antennes selon l'invention, lorsqu'il est exécuté sur un ordinateur. Ce programme d'ordinateur peut être stocké sur un support lisible par ordinateur et peut être exécutable par un microprocesseur.

Ce programme peut utiliser n'importe quel langage de programmation, et se présenter en tant que code source, code objet, ou code intermédiaire entre code source et code objet, sous une forme partiellement compilée ou sous toute autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une clé USB (« *USB flash drive* » en anglais) ou un disque dur.

D'autre part, le support d'informations peut être un support transmissible tel qu'un signal électrique ou optique, qui peut être acheminé via un câble électrique ou optique, par radio ou par d'autres moyens. Le programme d'ordinateur selon l'invention peut être en particulier téléchargé sur un réseau de type Internet.

En variante, le support d'informations peut être un circuit intégré dans lequel le programme est incorporé, le circuit étant adapté pour exécuter ou pour être utilisé dans l'exécution du procédé de communication radio multi-antennes selon l'invention.

ANNEXE 1

*Initialisation :*

$i = 1,$
$v = 1.$
$s_i$ est considéré.
$\omega_i = s_i$
$\Omega = \omega_i$
$f_1 = (f_{1,min}, f_{1,max})$

$$f_{1,min} = -\frac{B_T}{2}$$

$f_{1,max} = f_{1,min} + B_i$
$F = [f_1]$
$\Phi = \rho_i$

*Boucle :*

Tant que $v < P$ faire

$$\Big\{$$

$$s_j = \arg\big\{\max(\delta B_{s_i, s_j}), s_j \notin \Omega\big\}$$

$$\omega_{v+1} = s_j$$

$$\Omega = [\omega_1, ..., \omega_v, \omega_{v+1}]$$

$$\lambda_v = \delta B_{\omega_v, \omega_{v+1}}$$

$$\Lambda = [\lambda_1, ..., \lambda_v, \lambda_{v+1}]$$

$$f_{V+1,\min} = f_{V,\max} - \lambda_V$$

$$f_{V+1,\max} = f_{V+1,\min} + B_{\omega_{V+1}}$$

$$f_{V+1} = (f_{V+1,\min}, f_{V+1,\max})$$

$$F = [f_1, ..., f_V, f_{V+1}]$$

$$\phi_{V+1} = \rho'_j$$

$$\Phi = [\phi_1, ..., \phi_V, \phi_{V+1}]$$

$$V = V + 1$$

$$i = j$$

$$\}$$

## Revendications

1. Procédé de communication radio multi-antennes, dans lequel des sous-bandes de fréquences $B_{s_k}$, où $k=1,..., P$, ont été attribuées respectivement à $P$ antennes d'usager $s_1,...,s_P$ appartenant à un seul usager ou à plusieurs usagers, au sein d'une bande totale de fréquences $B_T$, et dans lequel au moins une de ces antennes d'usager communique avec une station de base sur sa sous-bande de fréquences respective $B_{s_k}$ au moyen d'un signal filtré par retournement temporel, **caractérisé en ce que**, pour au moins une paire d'antennes d'usager $s_i$ et $s_j$, où $i,j=1,..., P$ et $i \neq j$, les sous-bandes de fréquences respectives $B_{s_i}$ et $B_{s_j}$ se chevauchent de $\delta B_{s_i,s_j}$, ledit chevauchement $\delta B_{s_i,s_j}$ étant une fonction prédéterminée de la corrélation entre les canaux de propagation respectifs de ces deux antennes d'usager avec ladite station de base.

2. Procédé de communication radio multi-antennes selon la revendication 1, **caractérisé en ce que** ladite corrélation entre les canaux de propagation de deux antennes d'usager $s_i$ et $s_j$ est évaluée à partir des fonctions d'autocorrélation et d'intercorrélation entre les réponses impulsionnelles $h_i(t)$ et $h_j(t)$ de ces deux canaux.

3. Procédé de communication radio multi-antennes selon la revendication 1 ou la revendication 2, **caractérisé en ce que**, pour inclure une antenne d'usager supplémentaire, ledit procédé comprend les étapes suivantes :

   - calcul, pour chaque paire d'antennes d'usager $s_i$ et $s_j$, où $i,j=1,..., P$ et $i \neq j$, d'un chevauchement cible $\delta B_{s_i,s_j}$ ;
   - redistribution de $P$ sous-bandes de fréquences aux $P$ antennes d'usager, à présent référencées $\omega_1,...,\omega_P$, de telle sorte que les sous-bandes de chaque paire de sous-bandes successives $B_{\omega_l} B_{\omega_l+1}$ se chevauchent de $\delta B_{s_i,s_j}$, où l'antenne $\omega_l$ était précédemment référencée $s_i$ et l'antenne $\omega_{l+1}$ était précédemment référencée $s_j$ ;
   - attribution à ladite nouvelle antenne d'usager, référencée $\omega_{P+1}$, dans la bande $B_T$, d'une sous-bande de fréquences $B_{\omega_{P+1}}$ de largeur égale à une partie au moins de la somme des chevauchements $\delta B_{s_i,s_j}$ ; et
   - signalisation à chacune des ($P+1$) antennes d'usager de la nouvelle sous-bande de fréquences $B_{\omega_k}$, où $k=1,..., P+1$, qui lui est respectivement attribuée.

4. Dispositif de communication radio multi-antennes, possédant des moyens pour communiquer avec $P$ antennes d'usager $s_1,...,s_P$ appartenant à un seul usager ou à plusieurs usagers à qui des sous-bandes de fréquences $B_{s_k}$, où $k=1,..., P$, ont été attribuées respectivement au sein d'une bande totale de fréquences $B_T$, et possédant des moyens pour communiquer avec au moins une de ces antennes d'usager sur sa sous-bande de fréquences respective $B_{s_k}$ au moyen d'un signal filtré par retournement temporel, **caractérisé en ce qu'**il possède en outre des moyens pour attribuer à au moins une paire d'antennes d'usager $s_i$ et $s_j$, où $i,j=1,...,P$ et $i \neq j$, des sous-bandes de fréquences respectives $B_{s_i}$ et $B_{s_j}$ se chevauchant de $\delta B_{s_i,s_j}$, ledit chevauchement $\delta B_{s_i,s_j}$ étant une fonction prédé-

terminée de la corrélation entre les canaux de propagation respectifs de ces deux antennes d'usager avec ledit dispositif.

5. Dispositif de communication radio multi-antennes selon la revendication 4, **caractérisé en ce qu'**il possède des moyens pour évaluer ladite corrélation entre les canaux de propagation de deux antennes d'usager $s_i$ et $s_j$ à partir des fonctions d'autocorrélation et d'intercorrélation entre les réponses impulsionnelles $h_i(t)$ et $h_j(t)$ de ces deux canaux.

6. Station de base, **caractérisée en ce qu'**elle comprend un dispositif selon la revendication 4 ou la revendication 5.

7. Moyen de stockage de données inamovible, ou partiellement ou totalement amovible, comportant des instructions de code de programme informatique pour l'exécution des étapes d'un procédé selon l'une quelconque des revendications 1 à 3.

8. Programme d'ordinateur téléchargeable depuis un réseau de communication et/ou stocké sur un support lisible par ordinateur et/ou exécutable par un microprocesseur, **caractérisé en ce qu'**il comprend des instructions pour l'exécution des étapes d'un procédé de communication radio multi-antennes selon l'une quelconque des revendications 1 à 3, lorsqu'il est exécuté sur un ordinateur.

**Patentansprüche**

1. Mehrfachantennen-Funkverbindungsverfahren, bei dem Teilfrequenzbänder $B_{S_k}$, mit k=1, ..., P, je einem einzigen Benutzer oder mehreren Benutzern gehörenden P Benutzerantennen $s_1$, ..., $s_P$ innerhalb eines Gesamtfrequenzbands $B_T$ zugeordnet wurden, und wobei mindestens eine dieser Benutzerantennen in ihrem jeweiligen Teilfrequenzband $B_{S_k}$ mittels eines durch zeitliche Umkehr gefilterten Signals mit einer Basisstation kommuniziert, **dadurch gekennzeichnet, dass** für mindestens ein Paar von Benutzerantennen $s_i$ und $s_j$, mit i, j=1, ..., P und i ≠ j, die jeweiligen Teilfrequenzbänder $B_{S_i}$ und $B_{S_j}$ sich um $\delta B_{S_i,S_j}$ überlappen, wobei die Überlappung $\delta B_{S_i,S_j}$ eine vorbestimmte Funktion der Korrelation zwischen den jeweiligen Ausbreitungskanälen dieser zwei Benutzerantennen mit der Basisstation ist.

2. Mehrfachantennen-Funkverbindungsverfahren nach Anspruch 1, **dadurch gekennzeichnet, dass** die Korrelation zwischen den Ausbreitungskanälen von zwei Benutzerantennen $s_i$ und $s_j$ ausgehend von den Autokorrelations- und Interkorrelationsfunktionen zwischen den Impulsantworten $h_i(t)$ und $h_j(t)$ dieser zwei Kanäle ermittelt wird.

3. Mehrfachantennen-Funkverbindungsverfahren nach Anspruch 1 oder Anspruch 2, **dadurch gekennzeichnet, dass**, um eine zusätzliche Benutzerantenne einzubeziehen, das Verfahren die folgenden Schritte enthält:

- Berechnung, für jedes Paar von Benutzerantennen $s_i$ und $s_j$, mit i, j=1, ..., P und i ≠ j, einer Zielüberlappung $\delta B_{S_i,S_j}$ ;
- Neuverteilung von P Teilfrequenzbändern an die P Benutzerantennen, jetzt mit $\omega_l$, ..., $\omega_P$ bezeichnet, derart, dass die Teilbänder jedes Paars von aufeinanderfolgenden Teilbändern $B_{\omega_l}$ und $B_{\omega_l+1}$ sich um $\delta B_{S_i,S_j}$ überlappen, wobei die Antenne $\omega_l$ vorher mit $s_i$ und die Antenne $\omega_{l+1}$ vorher mit $s_j$ bezeichnet wurde;
- Zuweisung zur neuen Benutzerantenne mit der Bezeichnung $\omega_{P+1}$, im Band $B_T$, eines Teilfrequenzbands $B_{\omega_{P+1}}$ einer Breite gleich mindestens einem Teil der Summe der Überlappungen $\delta B_{S_i,S_j}$ ; und
- Signalisierung an jede der (P+1) Benutzerantennen des neuen Teilfrequenzbands $B_{\omega_k}$, mit k=1, ..., P+1, das ihr jeweils zugewiesen wird.

4. Mehrfachantennen-Funkverbindungsvorrichtung, die Einrichtungen zur Kommunikation mit einem einzigen Benutzer oder mehreren Benutzern gehörenden P Benutzerantennen $s_1$, ..., $s_P$ besitzt, denen Teilfrequenzbänder $B_{S_k}$, mit k=1, ..., P, innerhalb eines Gesamtfrequenzbands $B_T$ zugewiesen wurden, und die Einrichtungen besitzt, um mit mindestens einer dieser Benutzerantennen auf ihrem jeweiligen Teilfrequenzband $B_{S_k}$ mittels eines durch zeitliche Umkehr gefilterten Signals zu kommunizieren, **dadurch gekennzeichnet, dass** sie außerdem Einrichtungen besitzt, um mindestens einem Paar von Benutzerantennen $s_i$ und $s_j$, mit i,j=1, P und i ≠ j, jeweilige Teilfrequenzbänder $B_{S_i}$ und $B_{S_j}$ zuzuweisen, die sich um $\delta B_{S_i,S_j}$ überlappen, wobei die Überlappung $\delta B_{S_i,S_j}$ eine vorbestimmte Funktion der Korrelation zwischen den jeweiligen Ausbreitungskanälen dieser zwei Benutzerantennen mit der Vorrichtung ist.

5. Mehrfachantennen-Funkverbindungsvorrichtung nach Anspruch 4, **dadurch gekennzeichnet, dass** sie Einrichtungen zur Ermittlung der Korrelation zwischen den Ausbreitungskanälen von zwei Benutzerantennen $s_i$ und $s_j$ à ausgehend von den Autokorrelations- und Interkorrelationsfunktionen zwischen den Impulsantworten $h_i(t)$ und $h_j(t)$ dieser zwei Kanäle besitzt.

**6.** Basisstation, **dadurch gekennzeichnet, dass** sie eine Vorrichtung nach Anspruch 4 oder Anspruch 5 enthält.

**7.** Nicht entfernbare oder teilweise entfernbare oder ganz entfernbare Datenspeichereinrichtung, die Programmcodeanweisungen zur Ausführung der Schritte eines Verfahrens nach einem der Ansprüche 1 bis 3 aufweist.

**8.** Computerprogramm, das von einem Kommunikationsnetz herunterladbar und/oder auf einem computerlesbaren Träger gespeichert und/oder von einem Mikroprozessor ausführbar ist, **dadurch gekennzeichnet, dass** es Anweisungen zur Ausführung der Schritte eines Mehrfachantennen-Funkverbindungsverfahrens nach einem der Ansprüche 1 bis 3 enthält, wenn es in einem Computer ausgeführt wird.

## Claims

**1.** Multi-antenna radio communication method, in which frequency sub-bands $B_{s_k}$, where $k = 1,...,P$, have been allotted respectively to $P$ user antennas $s_1, ... , s_P$ belonging to a single user or to several users, within a total frequency band $B_T$, and in which at least one of these user antennas communicates with a base station on its respective frequency sub-band $B_{s_k}$ by means of a signal filtered by time reversal, **characterized in that**, for at least one pair of user antennas $s_i$ and $s_j$, where $i,j = 1,...,P$ and $i \neq j$, the respective frequency sub-bands $B_{s_i}$ and $B_{s_j}$, overlap by $\delta B_{s_i,s_j}$, said overlap $\delta B_{s_i,s_j}$ being a predetermined function of the correlation between the respective propagation channels of these two user antennas with said base station.

**2.** Multi-antenna radio communication method according to Claim 1, **characterized in that** said correlation between the propagation channels of two user antennas $s_i$ and $s_j$ is evaluated on the basis of the autocorrelation and intercorrelation functions between the impulse responses $h_i(t)$ and $h_j(t)$ of these two channels.

**3.** Multi-antenna radio communication method according to Claim 1 or Claim 2, **characterized in that**, to include an additional user antenna, said method comprises the following steps:

- calculation, for each pair of user antennas $s_i$ and $s_j$, where $i,j=1,...,P$ and $i \neq j$, of a target overlap $\delta B_{s_i,s_j}$;
- redistribution of $P$ frequency sub-bands to the $P$ user antennas, now referenced $\omega_1,...,\omega_P$, in such a way that the sub-bands of each pair of successive sub-bands $B_{\omega_l}$ and $B_{\omega_{l+1}}$ overlap by $\delta B_{s_i,s_j}$, where the antenna $\omega_l$ was previously referenced $s_i$ and the antenna $\omega_{l+1}$ was previously referenced $s_j$;
- allotting to said new user antenna, referenced $\omega_{P+1}$, in the band $B_T$, of a frequency sub-band $B_{\omega_{P+1}}$ of width equal to a part at least of the sum of the overlaps $\delta B_{s_i,s_j}$ ;
and
- signalling to each of the $(P + 1)$ user antennas of the new frequency sub-band $B_{\omega_k}$, where $k = 1,..., P + 1$, which is respectively allotted to it.

**4.** Multi-antenna radio communication device, possessing means for communicating with P user antennas $s_1,...,s_P$ belonging to a single user or to several users to which frequency sub-bands $B_{s_k}$ where $k = 1,..., P$, have been allotted respectively within a total frequency band $B_T$, and possessing means for communicating with at least one of these user antennas on its respective frequency sub-band $B_{s_k}$ by means of a signal filtered by time reversal, **characterized in that** it furthermore possesses means for allotting to at least one pair of user antennas $s_i$ and $s_j$, where $i,j = 1,..., P$ and $i \neq j$, respective frequency sub-bands $B_{s_i}$ and $B_{s_j}$ overlapping by $\delta B_{s_i,s_j}$, said overlap $\delta B_{s_i,s_j}$ being a predetermined function of the correlation between the respective propagation channels of these two user antennas with said device.

**5.** Multi-antenna radio communication device according to Claim 4, **characterized in that** it possesses means for evaluating said correlation between the propagation channels of two user antennas $s_i$ and $s_j$ on the basis of the autocorrelation and intercorrelation functions between the impulse responses $h_i(t)$ and $h_j(t)$ of these two channels.

**6.** Base station, **characterized in that** it comprises a device according to Claim 4 or Claim 5.

**7.** Irremovable, or partially or totally removable means for storing data, comprising computer program code instructions for the execution of the steps of a method according to any one of Claims 1 to 3.

8. Computer program downloadable from a communication network and/or stored on a medium readable by computer and/or executable by a microprocessor, **characterized in that** it comprises instructions for the execution of the steps of a multi-antenna radio communication method according to any one of Claims 1 to 3, when it is executed on a computer.

FIG. 1

FIG. 2

FIG. 3

## RÉFÉRENCES CITÉES DANS LA DESCRIPTION

**Documents brevets cités dans la description**

- GB 2463508 A

**Littérature non-brevet citée dans la description**

- **S. PAQUELET ; M. AUBERT.** An Energy Adaptive Demodulation for High Data Rates with Impulse Radio. *Proceedings of IEEE Radio and Wireless Conference,* Septembre 2004, 323-236

- **H.T. NGUYEN.** On the performance of one bit time reversal for multi-user wire/ess communications. *IEEE ISWCS,* 2007, 672-676